Europäisches Patentamt

European Patent Office

Office européen des brevets

(11) Numéro de publication: **0 097 205**
**B1**

(12) **FASCICULE DE BREVET EUROPEEN**

(45) Date de publication du fascicule du brevet: **18.03.87**

(21) Numéro de dépôt: **82200781.1**

(22) Date de dépôt: **23.06.82**

(51) Int. Cl.⁴: **H 02 K 15/04, H 01 F 41/06**

(54) **Procédé de bobinage et machine à bobiner utilisant ce procédé.**

(43) Date de publication de la demande:
**04.01.84 Bulletin 84/01**

(45) Mention de la délivrance du brevet:
**18.03.87 Bulletin 87/12**

(73) Titulaire: **ATELIERS DE CONSTRUCTIONS ELECTRIQUES DE CHARLEROI (ACEC) Société Anonyme**
**Avenue Lloyd George 7**
**B-1050 Bruxelles (BE)**

(84) Etats contractants désignés:
**AT BE CH DE FR GB IT LI LU NL SE**

(72) Inventeur: **Gouttierre, Jean**
**26, Avenue de Burlet**
**B-1400 Nivelles (BE)**

(56) Documents cités:
**DE-C- 919 357**
**FR-A-2 226 772**
**GB-A- 378 947**
**US-A-3 747 188**
**US-A-3 771 736**

Courier Press, Leamington Spa, England.

## Description

L'invention concerne un procédé de fabrication de bobines électriques par enroulement à plat de conducteurs de section parallèlipipèdique à l'aide de galets jumelés appliqués avec une force constante contre les parois d'un mandrin en rotation. L'invention concerne également une machine de bobinage comportant, pour appliquer ce procédé, une tête de conformation guidée en direction de l'axe de rotation du mandrin et servant à l'articulation des galets jumelés.

La fabrication des bobines des pôles principaux et des pôles auxiliaires utilisés dans des moteurs de traction se fait généralement, par enroulement à plat de fils de cuivre méplats, sur des mandrins de formes appropriées. Pour obtenir une grande compacité de la bobine il faut qu'au cours de l'enroulement, les spires de la bobine restent constamment et parfaitement jointives. Il faut donc que le fil méplat soit constamment appliqué sur le mandrin lors de la fabrication de la bobine. L'application, sur le mandrin, de la spire en voie de conformation se fait généralement en tendant le fil méplat contre le mandrin. Dans les machines à bobiner utilisant ce procédé la difficulté réside à garder une tension maximum sans toutefois dépasser la limite élastique du matériau à bobiner pour ne pas obtenir des sections et des longueurs de bobine non conformes aux valeurs imposées. Il est fréquent que par manque de souplesse dans le réglage de l'effort de traction de ces machines à bobiner, l'effort de traction exercé sur le fil méplat dépasse la limite élastique et engendre des rebus fâcheux. D'autres procédés sont utilisés pour conformer la bobine sur le mandrin. Le brevet DE—C—919357 décrit un dispositif, pour la fabrication de bobine carrée, qui applique le fil, préalablement conduit dans une coulisse, contre le mandrin à l'aide d'un galet agissant au droit de l'axe de rotation du mandrin. Dans ce dispositif, la direction de la force d'application et la direction de conduite de la coulisse sont perpendiculaires et leur intersection s'opère au droit de l'axe de rotation de mandrin, de sorte qu'au fur et à mesure que le mandrin carré tourne, le fil est d'abord incurvé vers l'extérieur du mandrin avant d'être appliqué contre celui-ci. Cette courbure préalable, tendant à écarter le fil par déformation, se marque particulièrement lorsque le galet agit au milieu du côté du mandrin carré donnant ainsi à la bobine un renflement dans la zone médiane de chaque côté. En outre toutes les machines actuelles présentent le défaut commun consistant en un démandrinage lent et laborieux dû à la force de serrage des spires de la bobine sur le mandrin. L'enlèvement de la bobine terminée, du mandrin sur laquelle elle a été conformée, se fait manuellement par une série d'opérations qui dégagent progressivement la bobine. Ces manipulations sont souvent longues et délicates.

Le procédé de bobinage et la machine utilisant ce procédé revendiqués dans l'invention remédient aux inconvénients précités et augmentent fortement les cadences de production.

Le procédé consiste d'abord à conformer chaque spire de la bobine à l'aide de galets jumelés, articulés selon un premier axe mécanique, appliquant constamment le fil méplat contre le contour d'un mandrin, en rotation autour d'un second axe mécanique, avec un effort déterminé exercé par un vérin dont l'axe de symètrie est, dans un même plan, perpendiculaire à la fois aus deux axes mécaniques précités et ensuite à dégager du mandrin la bobine ainsi conformée par une seule opération automatique. Les galets jumelés appliquent le fil méplat sur le contour du mandrin en une zone située, par rapport à l'axe de rotation du mandrin, à l'opposé de l'arrivée du fil méplat.

Pour appliquer ce procédé, la machine est équipée de galets pousseurs jumelés, montés librement en bout d'un verin à grand débattement fournissant une poussée quasi-constante pour conformer la spire sur un mandrin centré au milieu d'un plateau tournant. De plus au milieu de ce plateau tournant est disposé en équipement constitué d'une part d'un mandrin fixé au plateau tournant et d'autre part d'une plaque d'éjection faisant paire avec le mandrin et conformée pour s'adapter parfaitement à la périphérie du mandrin choisi. Cette plaque d'éjection est poussée par une série de tiges, guidées au travers du plateau tournant. Cette même machine possède encore un dispositif de matriçage conformant simultanément la fin d'une bobine et le début de la suivante.

L'invention est exposée plus en détails à l'aide des figures 1, 2, 3 et 4 qui montrent un exemple de réalisation d'une machine appliquant le procédé revendiqué.

La figure 1 est une coupe en élévation représentant le bâti principal de la machine et ses équipements permettant la conformation des spires sur le mandrin et le démandrinage de la bobine terminée.

La figure 2 représente les mêmes éléments dans une vue en plan.

La figure 3 montre en élévation un châssis auxiliaire et son équipement de matriçage.

La figure 4 est une vue en plan du châssis auxiliaire et de son équipement de matriçage.

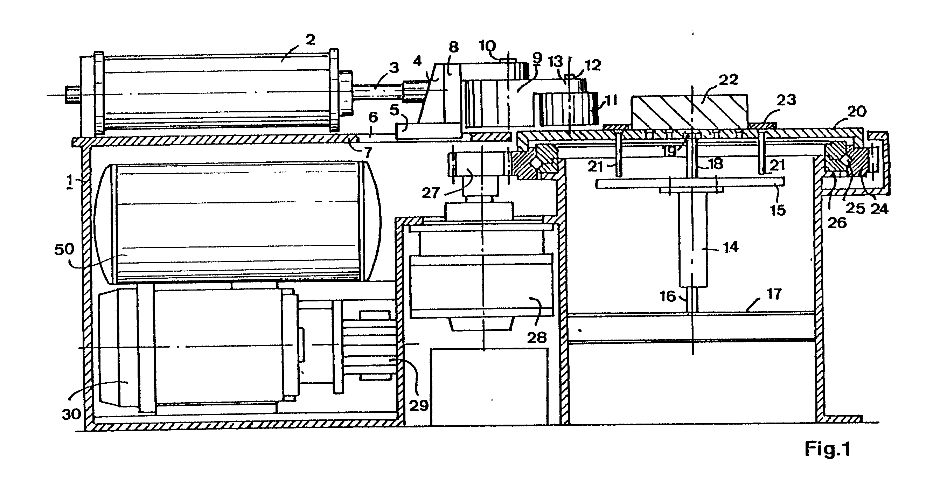

Sur la figure 1, un châssis principal *1* supporte un vérin 2, appelé verin de conformation dont la tige 3 est solidarisée à un chariot 4 libre de se déplacer au moyen de patins 5 coulissant dans des glissières 6 montées sur une table 7 du châssis *1*. Le chariot 4 est muni d'une potence 8 sur laquelle s'articule une tête de conformation *9* libre d'osciller autour d'un axe 10 implanté verticalement dans la potence 8.

La tête de conformation *9* est constituée de deux galets jumelés 11, appelés galets pousseurs, libres de pivoter chacun autour d'un axe 12 implanté verticalement dans un plateau supérieur 13 de la tête de conformation *9*.

Le châssis *1* porte encore un second vérin 14, appelé vérin d'extraction, adossé à un plateau d'extraction 15.

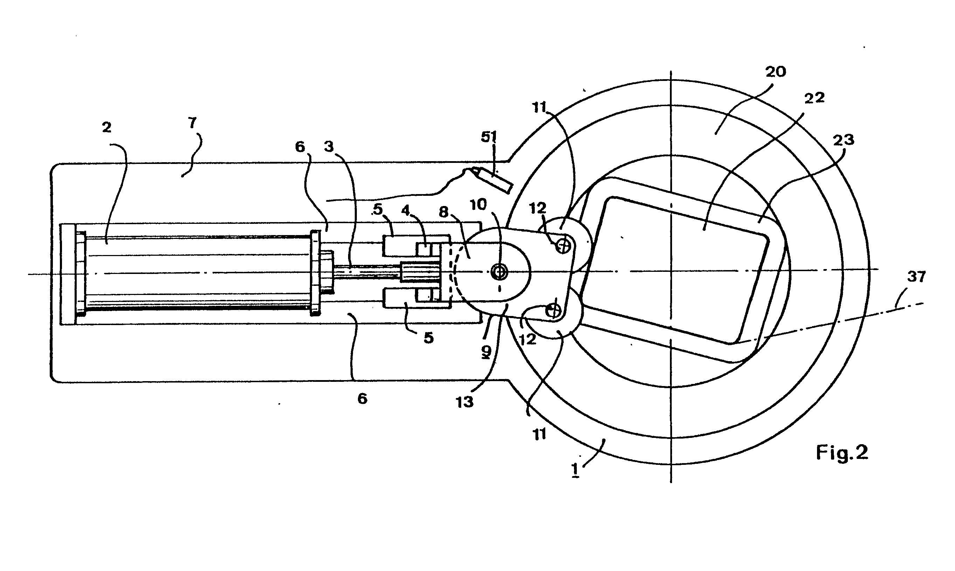

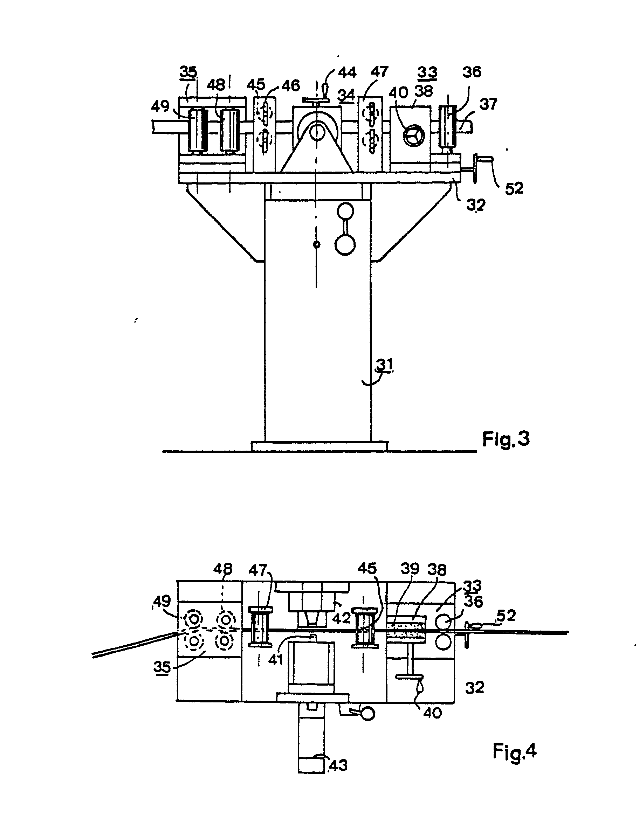

Le vérin d'extraction 14 présente une longue tige dont la partie inférieure 16 prend appui sur une traverse 17 du châssis *1* et dont la partie supérieure 18 est maintenue au centre du plateau tournant 20 à l'aide d'un centreur 19 solidarisé au plateau tournant 20. Selon le volume d'huile admis dans le cylindre du vérin d'extraction 18, celui-ci monte ou descend le long de sa tige en entraînant dans son mouvement le plateau d'extraction 15 qui lui est adossé. Lorsque le plateau d'extraction 15 est poussé vers le haut, il appuye sur des tiges d'éjection 21 qui coulissent librement dans le plateau tournant 20. Sur le plateau tournant 20 est fixé un mandrin 22 autour duquel est disposé une lunette 23, appelée extracteur, de formes et de dimensions adaptées à celle du mandrin 22. Le plateau tournant 20 est monté sur une roue dentée 24 équipée d'un roulement à rouleaux 25 posé sur une couronne d'appui 26 du châssis *1*. La roue dentée 24 du plateau tournant 20 est entraînée par un pignon 27 monté en bout d'arbre d'un moteur 28. Dans l'exemple de réalisation présenté en figure 1, le moteur 28 est un moteur hydraulique commandé par une pompe 29 et un moteur électrique 30. Alors que la figure 1 représente les galets pousseurs 11 en retrait du mandrin 22, la figure 2 montre les galets pousseurs 11 contre le mandrin 22. Les figures 3 et 4 sont relatives à un châssis auxiliaire *31* muni d'une tablette supérieure 32 sur laquelle sont fixés respectivement un équipement de nettoyage *33* de fils de cuivre méplats, un équipement de matriçage *34* et un équipement de guidage *35*. L'équipement de nettoyage *33* comporte une paire de galets verticaux 36 chargés de diriger le fil de cuivre méplat 37 venant d'un dérouleur, non représenté, entre deux plateaux 38 garnis chacun d'une bande abrasive 39 et dont le rapprochement est commandé par une manivelle 40. Le fil méplat 37 passe alors dans l'équipement de matriçage *34* constitué notamment d'un poinçon 41 et d'une matrice 42 dont le rôle est de conformer simultanément les deux extrémités situées respectivement en début et en fin des deux bobines qui seront successivement enroulées. La conformation des extrémités de bobine est nécessaire pour permettre le brasage ultérieur des connexions. Le poinçon 41 est commandé par un vérin 43 appelé verin de matriçage. L'ensemble poinçon 41-matrice 42 est réglable en hauteur par un dispositif actionné par une manivelle de commande 44.

D'autre part le fil de cuivre méplat 37 est guidé en hauteur par des galets horizontaux 48 disposés par paires à l'aval et à l'amont de l'équipement de matriçage *34* pour soutenir le fil méplat 37 par le champ. Ces galets horizontaux 45 sont réglables en hauteur à l'aide de boutonnières 46 faites dans des montants 47 fixés à la tablette supérieure 32.

Le réglage des galets horizontaux 45 permet d'amener le fil méplat 37 dans le plan de la lunette 23.

L'équipement de guidage *35* du châssis auxiliaire *31* comporte deux paires de galets verticaux. Une première paire de galets verticaux 48 empêche le basculement du fil méplat sortant de l'équipement de matriçage 34. L'autre paire de galets verticaux 49 positionnent convenablement le fil méplat par rapport au plateau tournant 20. Lorsque le fil méplat 37, au sortir du dérouleur, est passé successivement à travers l'équipement de nettoyage *33*, l'équipement de matriçage *34* et l'équipement de guidage *35* du châssis auxiliaire *31*, le bout de fil méplat est ensuite maintenu fermement contre le mandrin 22 solidarisé au plateau tournant 20. Lors de l'opération de bobinage, le verin d'extraction 14 est en position basse permettant ainsi à la lunette 23 de s'appuyer sur le plateau tournant 20. L'opération de bobinage débute en amenant la tête de conformation *9* à l'aide du vérin de conformation 2 contre le mandrin 22. Le plateau tournant 20 est ensuite démarré au moyen du moteur hydraulique 28. Compte tenu de la forme et des dimensions du mandrin 22, le chariot 4 auquel le tête de conformation *9* est fixée, subit des déplacements importants peu compatibles avec un effort à peu près constant que devrait exercer le vérin de conformation 2. Pour réduire les variations de la force exercée par le vérin de conformation 2, suite aux variations importantes de volume mis sous pression dans le vérin de conformation 2 lors des déplacements du chariot 4, on adjoint, au volume du vérin de conformation 2, un réservoir de grande capacité 50. De la sorte, les débattements du piston du vérin de conformation 2 influence très faiblement la pression régnant à l'intérieur des volumes cumulés du vérin de conformation 2 et du réservoir supplémentaire 50.

La mobilité de la tête de conformation *9* permet, à tout instant, de maintenir les deux galets pousseurs 11 en contact permanent avec le mandrin 22. Il en est évidemment de même, lorsque le début du fil méplat 37 est entraîné par le mandrin 22 sous les galets pousseurs 11 qui obligent le fil méplat à épouser intimement la forme du mandrin 22. Lorsque la première spire est à peu près terminée, on introduit le matériau isolant en bande pour isoler chaque spire.

Par rotation du plateau tournant 20, la bobine se forme spire par spire jusqu'à ce qu'un dispositif de comptage 51 arrête automatiquement le plateau tournant 20 lorsque le bobinage atteint le nombre de spires présélectionné.

Peu avant la fin du bobinage de l'enroulement en voie de conformation sur le mandrin 22, le plateau tournant 22 est arrêté, pour permettre à l'équipement de matriçage *34* de conformer simultanément la fin de la bobine en conformation sur le mandrin 22 et le début du fil méplat qui servira à la fabrication de la bobine suivante. Il faut remarquer que la mise à l'arrêt de la machine est toujours précédée du retrait de la tête de conformation 9. Le matriçage des extrémités du fil méplat est obtenue à l'aide du vérin de matriçage 43 poussant le poinçon 41 dans la matrice 42. Après matriçage, le plateau tournant 20 est ensuite redémarré pour terminer la bobine. Lorsque le bobinage est terminé, le plateau tournant 20 est de nouveau arrêté et en actionnant le vérin d'extraction 14, l'opérateur remonte le plateau d'extraction 15 qui pousse les tiges d'éjection 21.

En coulissant dans le plateau tournant 20, les tiges d'éjection 21 repoussent la lunette 23 qui dégage du mandrin 22 la bobine terminée. Cette opération de démandrinage est très rapide et n'entraîne aucune détérioration ou déformation de la bobine terminée.

Le mandrin 22 et la lunette 23 qui lui est associée peuvent avoir des formes variables selon les dimensions de bobines à fabriquer. Des trous taraudés sont prévus dans le plateau tournant 20 pour fixer fermement les différentes formes de mandrin 22 à l'aide de vis. Des trous alésés sont répartis dans le plateau tournant 20 pour disposer les tiges d'éjection 21 de manière à s'adapter aux différentes formes de lunette 23. Les commandes des différentes opérations se font au départ d'un pupitre non représenté. Sur ce pupitre sont groupées les commandes du vérin de conformation 2, du vérin d'extraction 14, du vérin de matriçage 43, de la vitesse et du sens de rotation du plateau tournant 20, du compteur de spires et d'un arrêt d'urgence. De plus la rotation du plateau tournant 20 est instantanément interrompue dès que l'opérateur lâche le pied d'une pédale de sécurité connectée au pupitre de commande.

Une manivelle 52 permet à l'équipement de matriçage 52 de se déplacer le long de la tablette 32 pour prédéterminer la longueur du fil méplat avant matriçage et bobinage de la dernière spire.

L'invention couvre également les équivalents techniques de l'exemple de réalisation donné dans les figures 1, 2, 3 et 4. La lunette d'extraction 23 généralement constituée en une seule pièce peut être faite en plusieurs parties utilisables pour différentes formes ou différentes dimensions du mandrin 22. Il en est de même pour le mandrin 22 qui peut-être réalisé en plusieurs pièces pour faciliter l'accrochage de début d'une spire.

Dans un autre exemple de réalisation la tête de conformation 9 peut être soutenue par un étrier monté en bout de tige 3 du vérin de conformation 2, et guidé par une longue coulisse se déplaçant entre deux rangées de roulements rectilignes montés sur un portique solidaire du châssis 1.

## Revendications

1. Procédé de fabrication de bobines par enroulement de fil méplat (37) appliqué contre un mandrin (22), fixé à un plateau tournant (20) à l'aide d'un poussoir agissant au droit de l'axe du plateau tournant (20) caractérisé en ce que la conformation des bobines est obtenue à l'aide de galets jumelés, appelés galets pousseurs (11), articulés selon un premier axe mécanique (10) et appliquant constamment le fil méplat (37) contre le contour du mandrin (22), en rotation suivant l'axe mécanique du plateau tournant (20), avec un effort déterminé, exercé selon une direction perpendiculaire, dans un même plan au premier axe mécanique (10) et à l'axe mécanique du plateau tournant (20) et en ce que les galets pousseurs (11) appliquent le fil méplat (37) sur le contour du mandrin (22) en une zone située, par rapport à l'axe de rotation du mandrin, à l'opposé de l'arrivée du fil méplat.

2. Procédé de fabrication selon la revendication 1, caractérisé en ce que le dégagement de la bobine conformée est obtenu à l'aide d'une lunette d'extraction (23), épousant en tout ou en partie les contours du mandrin (22), et dont le mouvement parallèle à l'axe du mandrin (22) pousse la bobine conformée en dehors du mandrin.

3. Machine à bobiner mettant en oeuvre le procédé selon la revendication 1, caractérisée en ce que des galets jumelés, appelés galets pousseurs (11), disposés parallèlement à l'axe de rotation du plateau tournant (20), sont montés dans une tête de conformation (9), articulée selon un axe parallèle à l'axe du plateau tournant (20), guidée en direction de l'axe de rotation du plateau tournant (20), et poussée dans cette direction avec une force pratiquement constante, appliquent le fil méplat (37) sur le contour du mandrin (22) en une zone située, par rapport à l'axe de rotation du mandrin, à l'opposé de l'arrivée du fil méplat.

4. Machine à bobiner pour exécuter le procédé selon la revendication 3, caractérisée en ce que la tête de conformation (9) est montée sur un chariot (4) muni de patins (5) se déplaçant sur des glissières (6) et solidarisé à un moyen fournissant une force à peu près constante.

5. Machine à bobiner pour exécuter le procédé selon la revendication 3, caractérisée en ce que la tête de conformation (9) est montée sur un étrier muni d'une longue coulisse se déplaçant entre deux rangées de roulements rectilignes disposés sur un portique solidaire du châssis (1) et solidarisé à un moyen fournissant une force à peu près constante.

6. Machine à bobiner selon la revendication 4 ou 5, caractérisée en ce que le moyen fournissant une force à peu près constante est un vérin (2), appelé vérin de conformation, dont la tige (3) est reliée, par l'intermédiaire d'un système de guidage orienté vers l'axe de rotation du plateau tournant (20) à la tête de conformation (9) et dont le cylindre est raccordé à un réservoir (50) de grand volume.

7. Machine à bobiner pour exécuter le procédé selon la revendication 2, caractérisée en ce que la lunette d'extraction (23) est poussée le long du mandrin (22) par une série de tiges d'éjection (21) réparties dans le plateau tournant (20) et coulissant simultanément sous la poussée d'un plateau d'extraction (15) actionné par un vérin d'extraction (14).

8. Machine à bobiner selon la revendication 7, caractérisée en ce que la lunette d'extraction (23) est réalisée en plusieurs parties, chacune d'elles agissant, sur la bobine, au moins à chaque coin du mandrin (22).

9. Machine à bobiner selon une des revendications précédente caractérisée en ce qu'un châssis auxiliaire (37) supporte un équipement de matriçage (34) agissant à la fois à la fin d'une bobine et au début de la suivante et en ce que l'équipement du matriçage (34) est réglable en hauteur (44) et en longueur (52).

10. Machine à bobiner selon une des revendications précédentes, caractérisée en ce qu'un châssis auxiliaire (31) supporte un équipement de nettoyage (33) de fil méplat (37) consitué de deux bandes abrasives (39) adossées à des plateaux dont l'écartement est réglable (40).

## Patentansprüche

1. Verfahren zur Herstellung von Spulen durch Aufwickeln von halbflachem Draht (37), der mit Hilfe einer im Bereich der Achse der Drehplatte (20) wirkenden Drückvorrichtung gegen einen an einer Drehplatte (20) befestigten Dorn (22) gedrückt wird, dadurch gekennzeichnet, daß die Formung der Spulen mit Hilfe von Druckrollen (11) genannten Zwillingsrollen verwirklicht wird, die bezüglich einer ersten mechanischen Achse (10) gelenkig gelagert sind, und den halbflachen Draht (37) dauernd gegen den Umfang des um die mechanische Achse der Drehplatte (20) rotierenden Dorns (22) drücken, und zwar mit einer vorgegebenen Kraft, die in einer zu der ersten mechanischen Achse (10) und der mechanischen Achse der Drehplatte (20) senkrechten Richtung in der Ebene dieser Achsen ausgeübt wird, und daß die Druckrollen (11) den halbflachen Draht (37) in einer Zone, die bezüglich der Drehachse des Dorns an dem zu der Zuführung des halbflachen Drahtes entgegengesetzten Ende gelegen ist, gegen den Umfang des Dorns (22) drücken.

2. Herstellungsverfahren gemäß Anspruch 1, dadurch gekennzeichnet, daß die Ablösung der gewickelten Spule mit Hilfe eines Auswerfrings (23) verwirklicht wird, der an dem Umfang des Dorns (22) ganz oder teilweise anliegt, und der parallel zu der Achse des Dorns (22) verschoben wird, um die gewickelte Spule von dem Dorn abzulösen.

3. Wickelmaschine, bei der das Verfahren gemäß Anspruch 1 angewendet wird, dadurch gekennzeichnet, daß die parallel zu der Drehachse der Drehplatte (20) angeordneten, Druckrollen (11) genannten Zwillingsrollen in einem Formungskopf (9) montiert sind, der bezüglich einer zu der Achse der Drehplatte (20) parallelen Achse gelenkig gelagert ist, in Richtung auf die Drehachse der Drehplatte (20) geführt wird, und mit einer praktisch konstanten Kraft in diese Richtung gedrückt wird, und daß diese Druckrollen (11) den halbflachen Draht (37) in einer Zone, die bezüglich der Drehachse des Dorns an dem zu der Zuführung des halbflachen Drahtes entgegengesetzten Ende gelegen ist, gegen den Umfang des Dorns (22) drücken.

4. Wickelmaschine zur Ausführung des Verfahrens gemäß Anspruch 3, dadurch gekennzeichnet, daß der Formungskopf (9) auf einem Wagen (4) montiert ist, der mit Gleitschuhen (5) versehen ist, die auf Gleitführungen (6) verschoben werden, wobei der Wagen (4) mit einem Mittel verbunden ist, das eine ungefähr konstante Kraft liefert.

5. Wickelmaschine zur Ausführung des Verfahrens gemäß Anspruch 3, dadurch gekennzeichnet, daß der Formungskopf (9) auf einem Bügel montiert ist, der mit einer langen Gleitschiene versehen ist, die zwischen zwei Reihen von geradlinigen Lagern verschoben wird, die auf einem mit dem Chassis (1) fest verbundenen Portalrahmen angeordnet sind, wobei dieser Bügel mit einem Mittel fest verbunden ist, das eine ungefähr konstante Kraft liefert.

6. Wickelmaschine gemäß Anspruch 4 oder 5, dadurch gekennzeichnet, daß das Mittel, das eine ungefähr konstante Kraft liefert, ein Formungszylinder genannter Hubzylinder (2) ist, dessen Stange (3) über ein zu der Drehachse der Drehplatte (20) hin gerichtetes Führungssystem mit dem Formungskopf (9) verbunden ist, und dessen Zylinder mit einem Vorratsbehälter (50) von großem Volumen verbunden ist.

7. Wickelmaschine zur Ausführung des Verfahrens gemäß Anspruch 2, dadurch gekennzeichnet, daß der Auswerfring (23) längs des Dorns (22) mittels einer Reihe von Auswerfstäben (21) verschoben wird, die über die Drehplatte (20) verteilt sind und infolge der Schubwirkung einer durch einen Auswerfzylinder (14) betätigten Auswerfplatte (15) gleichzeitig vorgeschoben werden.

8. Wickelmaschine gemäß Anspruch 7, dadurch gekennzeichnet, daß der Auswerfring (23) in mehreren Teilen verwirklicht ist, wobei diese Teile mindestens an jeder Ecke des Dorns (22) auf die Spule wirken.

9. Wickelmaschine gemäß einem der vorhergehenden Ansprüche, dadurch gekennzeichnet, daß ein Hilfschassis (31) eine Gesenkformungsausrüstung (34) trägt, die auf das Ende einer Spule und zugleich auf den Anfang der folgenden Spule wirkt, und daß die Gesenkformungsausrüstung (34) eine Höheneinstellung (44) und eine Längeneinstellung (52) aufweist.

10. Wickelmaschine gemäß einem der vorhergehenden Ansprüche, dadurch gekennzeichnet, daß ein Hilfschassis (31) eine Ausrüstung (33) zum Reinigen des halbflachen Drahtes (37) trägt, die aus zwei Schmirgelstreifen (39) besteht, die an Platten anliegen, die mit einer Abstandseinstellung (40) ausgerüstet sind.

## Claims

1. Method of producing coils by winding flat wire (37) applied against a mandrel (22) fixed to a rotating plate (20) by means of a push member acting at right angles to the axis of the rotating plate (20), characterised in that the shaping of the coils is obtained by means of paired rollers called push rollers (11) mounted pivotably on a first pivot (10) and constantly applying the flat wire (37) against the contour of the mandrel (22), in rotational movement about the pivot of the rotating plate (20), with a specific force exerted in a direction perpendicular in one and the same plane to the first pivot (10) and to the pivot of the rotating plate (20), and in that the push rollers (11) apply the flat wire (37) on the contour of the mandrel (22) at a zone situated, with respect to the axis of rotation of the mandrel, opposite from the arrival of the flat wire.

2. Production method according to claim 1, characterised in that the release of the formed coil is obtained with the use of an encircling extracting element (23) conforming wholly or partly to the contours of the mandrel (22), the movement of said element parallel to the axis of the mandrel (22) pushing the formed coil off the mandrel.

3. Coil-winding apparatus using the method according to claim 1, characterised in that paired rollers called push rollers (11) arranged parallel to the axis of rotation of the rotating plate (20) are mounted in a forming head (9) mounted to be pivotable on an axis parallel to the axis of the rotating plate (20), said head being guided in the direction of the axis of rotation of the rotating plate (20) and being pushed in this direction with a substantially constant force, and apply the flat wire (37) against the contour of the mandrel (22) at a zone situated oppositely from the arrival of the flat wire relatively to the axis of rotation of the mandrel.

4. Coil-winding apparatus for carrying out the method according to claim 3, characterised in that the forming head (9) is mounted on a carriage (4) which is provided with shoes (5) moving on slideways (6) and is connected integrally with a means delivering an approximately constant force.

5. Coil-winding apparatus for carrying out the method according to claim 3, characterised in that the forming head (9) is mounted on a stirrup provided with a long slide displaceable between two rectilinear rolling contact bearing rows arranged on a gantry integral with the stand (1) and connected integrally to a means delivering an approximately constant force.

6. Coil-winding apparatus according to claim 4 or 5, characterised in that the means delivering an approximately constant force is a jack (2), referred to as a forming jack, whose rod (3) is connected to the forming head (9) by means of a guide system orientated towards the axis of rotation of the rotating plate (20), and whose cylinder is connected to a large-volume tank (50).

7. Coil-winding apparatus for carrying out the method according to claim 2, characterised in that the encircling extracting element (22) is pushed along the mandrel (22) by a series of ejection rods (21) distributed in the rotating plate (20) and sliding simultaneously under the pressure of an extraction plate (15) actuated by an extraction jack (14).

8. Coil-winding apparatus according to claim 7, characterised in that the encircling extracting element (23) is made in a plurality of parts each of which acts on the coil at least at each corner of the mandrel (22).

9. Coil-winding apparatus according to one of the preceding claims, characterised in that an auxiliary stand (31) supports a stamping apparatus (34) acting on both the end of a coil and the start of the following coil, and in that the stamping apparatus (34) is adjustable as to height (44) and length (52).

10. Coil-winding apparatus according to one of the preceding claims, characterised in that an auxiliary stand (31) supports an apparatus (33) for the cleaning of the flat wire (37), this apparatus being constituted by two abrasive strips (39) backed with plates whose spacing is adjustable (40).

Fig.1

0 097 205

Fig.2

Fig.3

Fig.4